# EUROPEAN PATENT SPECIFICATION

(11) **EP 2 606 717 B1**
(45) Date of publication and mention of the grant of the patent: **17.02.2016**
(21) Application number: 11195359.2
(22) Date of filing: 22.12.2011
(51) Int. Cl.: A01G 3/053, B27B 17/00

(54) **Vegetation cutting device**
Vorrichtung zum Schneiden von Vegetation
Dispositif de coupe de végétation

(43) Date of publication of application: 26.06.2013
(73) Proprietor: Black & Decker Inc., Newark, Delaware 19711 (US)
(72) Inventor: Tate, Clare, Newton Aycliffe, Durham DL5 4NT (GB)
(74) Representative: Stentiford, Andrew Charles

(56) References cited:
- EP-A1- 0 267 472
- EP-A1- 2 248 413
- EP-A2- 1 782 682
- EP-B1- 1 535 508
- EP-B1- 1 541 010
- WO-A1-2011/113445
- US-A- 6 108 867
- US-B2- 7 407 018

## Description

The present invention relates to a vegetation cutting device. In particular the present invention relates to a vegetation cutting device comprising a rotatable handle.

Vegetation cutting devices such as hedge trimmers are known power operated tools for cutting hedges and other foliage and vegetation. Typically hedge trimmers are powered by petrol or electric and an engine or motor drives a blade assembly comprising a pair of reciprocating blades. Many types of vegetation cutting devices, such as hedge trimmers and chainsaws employ a rear handle which can have a trigger for operation by the user and a front handle for allowing two handed use to provide greater stability when in operation.

During use the user typically grips the front handle and the rear handle of the hedge trimmer. However a user may find that he wants to cut vegetation at different heights, to cut vegetation of different shapes and to cut vegetation using different actions. For example, the user may wish to cut a vertical face of a hedge and a horizontal top of the hedge. The user may find that a hedge trimmer with front and rear handles permitting only one gripping position uncomfortable and frustrating to use.

Known hedge trimmers can have a front bail handle located near the blade assembly. The bail handle typically surrounds the top and sides of the hedge trimmer. This means that the user can rotate the hedge trimmer along the longitudinal axis of the hedge trimmer and still grip the front and rear handles providing more gripping positions. However a problem occurs if a dual switching operation is desired. A dual switching mechanism can provide a switch on the rear handle and another switch on the front bail handle and the hedge trimmer will only operate if both switches are actuated. Providing a switch on the front bail handle which can be actuated in all the positions means that the switch located on front bail handle has to extend along the entire length of the bail handle. This makes the front bail handle cumbersome and can make the front switch more likely to be accidently activated.

Some other hedge trimmers are known to have rotating handles to permit different gripping positions. For example, US 5,778,649 discloses a hedge trimmer including a front handle and a rear handle including a gas control. The rear handle is rotatable relative to the base of the hedge trimmer and the axis of rotation is inclined at an angle of about 25 degrees to the longitudinal axis of the hedge trimmer. The rear handle can be rotated into three different positions with a latch device and the gas control cooperates with the latch such that the rear handle cannot be rotated when the hedge trimmer is in operation. A problem occurs when the user wishes to rotate the rear handle during use. Typically the user will be gripping the front handle and the rear handle but the action of releasing the latch may not be achievable whilst gripping the front bail handle.

Another known hedge trimmer is shown in US 7,407,018 which discloses a hedge trimmer having a rotatable handle attached to a machine body. A throttle lever is provided on the handle and the handle is locked with a locking mechanism. When the locking mechanism is unlocked, a guard is moved over the throttle and thereby making the throttle inaccessible. If the user wishes to rotate the rear handle during whilst gripping the front handle, the user has to overcome the biasing spring and pull on the unlocking lever and then rotate the handle. Similarly the action of unlocking rear handle may not be achievable whilst holding the front handle.

If the user grips the rear handle with both hands to activate the mechanisms in US 5,778,649 and US 7,407,018 to rotate the rear handle, the hedge trimmer is unbalanced. The user will need to rest part or all of the hedge trimmer on the ground. Resting the blade assembly on the ground can damage the blades and the process of placing the hedge trimmer on the ground is frustrating for the user.

EP 1 782 682 A2 discloses a hedge trimmer with a rotatable front handle.

A hedge trimmer providing multiple gripping positions which can easily be achieved during operation is desired. Embodiments of the present invention aim to address the aforementioned problems.

According to an aspect of the present invention there is a vegetation cutting device comprising: a housing; a motor located within the housing, the motor comprising a rotating output shaft for driving one or more blades; a rotatable front handle being rotatably mounted on the housing and being adapted to rotate with respect to the housing, the rotatable front handle comprising a first trigger, wherein the motor is operable on actuation of the first trigger; a release button in mechanical cooperation with the rotatable front handle for actuating rotation of the front handle; and an interlock mechanism mechanically coupling the release button and the first trigger wherein actuation of the release button prevents actuation of the first trigger and actuation of the first trigger prevents actuation of the release button.

By providing a front rotating handle the user can modify the vegetation cutting device to provide multiple gripping positions without placing the vegetation cutting device on the ground. By gripping the front handle the user can hold the vegetation cutting device more stably and also rotate the handle. In this way vegetation cutting device is evenly balanced about the front rotating handle.

The interlock mechanism means that the use cannot operate the hedge vegetation cutting device and move the front rotatable handle at the same time. The interlock mechanism only allows operation of the vegetation cutting device or rotation of the front rotatable handle. This means that the vegetation cutting device has to be stopped before a user moves the position of the front rotatable handle. This makes modifying the gripping positions of the vegetation cutting device safer for the user.

According to some embodiments the interlock mechanism may comprise a first interlock element mechanically coupled to the first trigger and a second interlock element mechanically coupled to the release button, the first and second interlock elements selectively prevent actuation of the first trigger or the release button. Preferably the first interlock element may be moveable between an unblocking position, whereby the second interlock element is moveable and a blocking position whereby the second interlock element is prevented from movement. Additionally or alternatively the second interlock element may be moveable between and unblocking position whereby the first interlock element is moveable and a blocking position whereby the first interlock element is prevented from movement. Preferably the first interlock element may comprise a moveable rib and the second interlock element comprises a moveable shoulder portion. Preferably the moveable rib may be mounted on an actuation rod mechanically connected to the first trigger and the release button comprises the moveable shoulder portion.

According to some embodiments there may be a rear handle mounted on the housing and the rear handle comprises a second trigger wherein the motor is operable on actuation of the first and the second triggers. This means that the user must be holding both the front and rear handles before the vegetation cutting device will work. In this way, the vegetation cutting device demands two handed operation when activated and operation of the vegetation cutting device is safer.

According to one embodiment the first and second interlock elements may be biased towards the unblocking positions. This means that when the vegetation cutting device is not in use, either operation of the vegetation cutting device or rotation of the front handle can be achieved without first moving another part of the interlock mechanism. When the shoulder portion of the release button is in the unblocking position, the release button is in a position whereby the rotatable handle is fixed with respect to the housing. When the rib of the front trigger is in the unblocking position, the front trigger is in a position whereby the motor is not in operation.

Preferably the first trigger and the release button may be both depressible and depressing the first trigger prevents depressing the release button and depressing the release button prevents depressing the first trigger. A depressible release button and a depressible front trigger ensures that the user can easily select either the front trigger or the release button. At the same time this means that the interlock mechanism can be housed within the rotatable front housing. This makes the rotatable front handle compact and reduces the size of the rotatable front handle.

According to some embodiments the axis of rotation of the rotatable front handle may be substantially in line with a longitudinal axis of the reciprocating blades. This means that the user will grip the vegetation cutting device in a line which is substantially parallel to the axis of the reciprocating blades. In this way the user grips the handle such that the gripping position on the front handle is offset from the axis of the reciprocating blades in substantially one direction, which reduces the turning moment the user experiences when holding the rotatable front handle.

In some embodiments the rotatable front handle may be moveable between a plurality of positions. This provides greater gripping options for the user. Additionally the rotatable front handle may be rotatably mounted on a flange of the housing and the flange comprises a plurality of notches defining the plurality of positions and the release button comprises a finger portion for locating in any one of the notches. Additionally the finger portion of the release button may be moveable between a first position in which the rotatable front handle is moveable and a second position in which the finger is located in one of the notches thereby preventing rotation of the front rotatable handle.

Preferably the vegetation cutting device may be a hedge trimmer. Preferably the vegetation cutting device may be a chainsaw. The one or more blades may be a pair of reciprocating blades. Alternatively the one or more blades can be a blade on a chain for a chainsaw.

Various other aspects and further embodiments are also described in the following detailed description and in the attached claims with reference to the accompanying drawings, in which:
Figure 1 shows a perspective view of the vegetation cutting device;
Figure 2 shows side view of the vegetation cutting device;
Figure 3 shows a cut away side view of the vegetation cutting device showing operation of the rotatable front handle;
Figure 4 shows a cut away side view of the vegetation cutting device showing operation of the rotatable front handle;
Figure 5 shows a cut away side view of the vegetation cutting device showing operation of the rotatable front handle;
Figures 6a and 6b show a schematic side view of the dual switching mechanism;
Figure 7 shows a cut away side view of the vegetation cutting device showing operation of the rotatable front handle;
Figure 8 shows a cut away plan view of the vegetation cutting device showing operation of the rotatable front handle;
Figure 9 shows a cut away perspective view of the vegetation cutting device showing operation of the rotatable front handle;
Figure 10 shows a close up cut away side view of the rotatable front handle and interlock mechanism; and
Figure 11 shows an side schematic view of an alternative interlock mechanism.

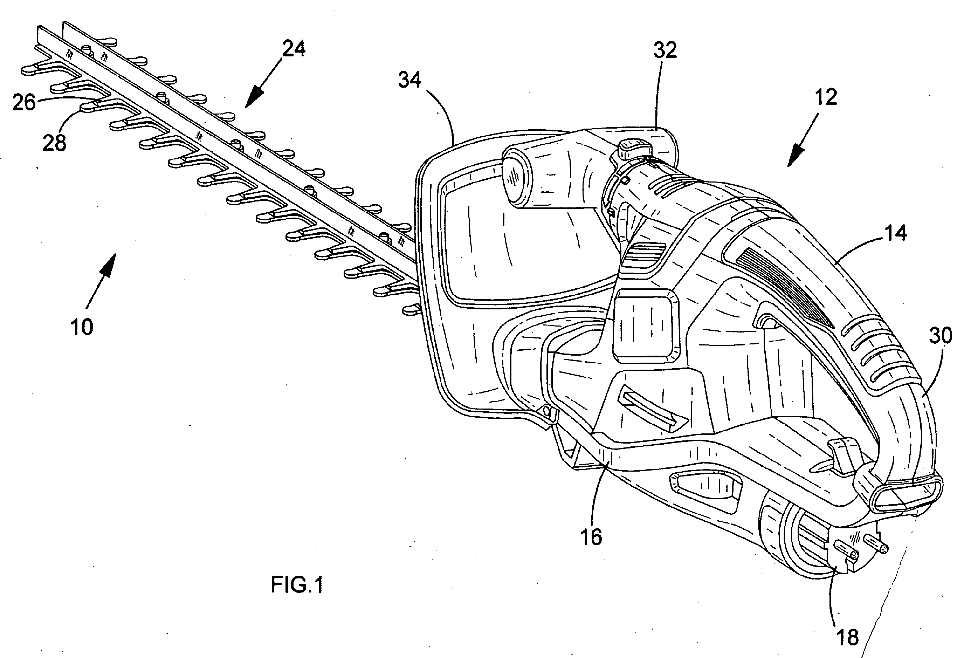

Figure 1 shows a perspective view of a vegetation cutting device 10. In some embodiments the vegetation cutting device is a hedge trimmer but the present invention is applicable to any other vegetation cutting devices such as chainsaws or string trimmers. From hereinafter the vegetation cutting device will be referred to a hedge trimmer 10.

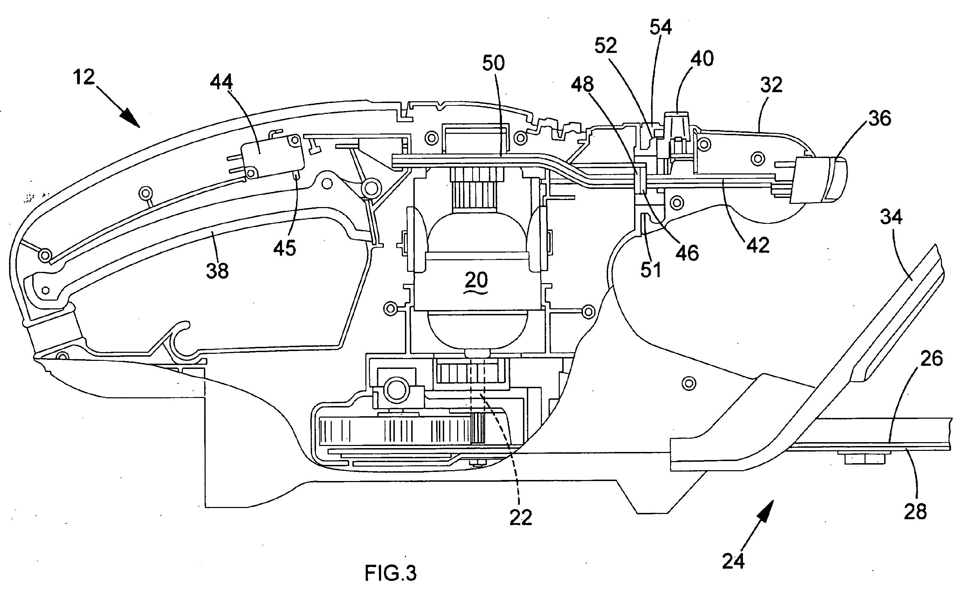

The hedge trimmer 10 comprises a housing 12 formed from a clam shell construction comprising a first half 14 and a second half 16. The internal components of the hedge trimmer 10 will now be explained referring to Figure 3, which shows a cut away side view of the hedge trimmer 10. The housing 12 encloses a motor 20 powered by an alternating current (AC) electric supply. The AC electric supply is provided by a suitable adaptor 18. In other embodiments the motor can be powered by a direct current (DC) electric supply. The DC electric supply is typically provided by a battery pack (not shown).

The motor 20 comprises an armature having a rotary drive shaft 22. The rotary draft shaft 22 is coupled to a blade assembly 24 via gearing which drives a pair of reciprocating blades 26 and 28. The reciprocating blades 26, 28 are moveable in opposite directions along substantially linear paths. In some alternative embodiments, the hedge trimmer 10 can be petrol or gas powered and the rotary drive shaft is driven by an internal combustion engine.

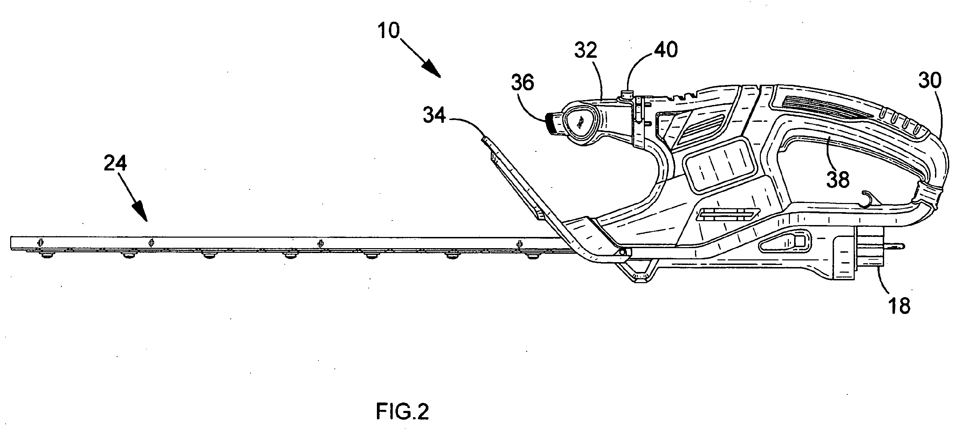

The exterior of the hedge trimmer 10 will now further be discussed with reference to Figures 1 and 2. Figure 2 shows a side view of the hedge trimmer 10. The housing 12 comprises a rear handle 30 and a front rotatable handle 32 for the user to grip with each hand. In some embodiments the front rotatable handle 32 is mounted on the housing 12 between the motor 20 and the blade assembly 24. In other embodiments, the rotatable front handle 32 is mounted on the housing 12 in a different position. A guard 34 is mounted on housing 12 for protecting the user's hand gripping the rotatable front handle 32 during use.

It will be clear that the hedge trimmer 10 can be used in a variety of different orientations however the hedge trimmer 10 has an overall directionality. The user will always hold the hedge trimmer 10 with the blade assembly 24 facing away from their body. The "front" of the hedge trimmer is understood to be towards the blade assembly 24 end and the "rear" of the hedge trimmer is understood to be towards the adaptor 18 end. In this way the rotatable front handle 32 is the handle which is closest to the blade assembly 24 and the rear handle 30 is the handle which is further from the blade assembly 24 and closest to the user's body.

The hedge trimmer 10 is activated by the user depressing a first actuation means or front trigger 36 located on the rotatable front handle 32. Depressing the front trigger 36 mechanically actuates a switch which completes an electrical circuit and operates the motor 20. In some embodiments the front trigger 36 is a button which extends along a forward facing of the front rotatable handle 32. The front trigger 36 has a biasing member, such as a spring, to bias the front trigger 36 to an "off" position.

Additionally or alternatively the hedge trimmer 10 has a dual switching mechanism. The dual switching mechanism comprises the front trigger 36 and a second actuation means or a rear trigger 38. The motor 20 is operable only on actuation of both the first and rear trigger 36, 38. This means that the user has to be holding the hedge trimmer 10 with both hands to operate the hedge trimmer 10. The rear trigger 38 is a depressible trigger button and has a biasing member such as a spring to bias the rear trigger 38 to an "off" position.

The rotatable front handle 32 as shown in Figures 1 and 2 is positioned in a first position. This position is a central or neutral position which provides the user with a convenient gripping position for cutting in a horizontal plane. If the user wishes to modify the gripping position, the position of the front rotatable handle 32 can be modified using a rotation actuation means or release button 40 located on the rotatable front handle 32. The front rotating handle 32 means the user can modify the hedge trimmer 10 to provide multiple gripping positions without placing the hedge trimmer 10 on the ground. By gripping the rotatable front handle 32 the user can hold the hedge trimmer 10 more stably and also rotate the front handle 32.

The release button 40 is a depressible button and has a biasing member, such as a spring, to bias the release button 40 to a position which fixes the rotatable front handle 32 in place. This means that when the user is not using the hedge trimmer 10 the hedge trimmer 10 defaults to a state whereby the hedge trimmer 10 is not activated and the rotatable front handle 32 is fixed in position.

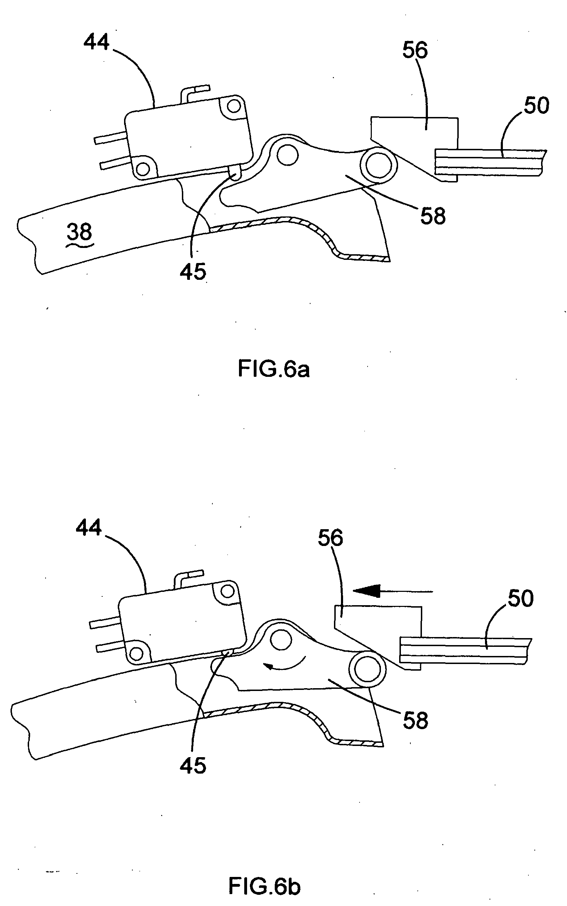

The front trigger 40 and dual switching mechanism will now be described in further detail with reference to Figures 3 to 5 and Figures 6a and 6b. Figures 3 to 5 show a cut away side view of the hedge trimmer showing different positions the front trigger 36 and the rear trigger 38. Figures 6a and 6b show a partial cut away side view of the microswitch in an unactuated position and actuated position respectively.

Figure 3 shows a cut away side view of the rotatable front handle 32 with the front trigger 36 in the "off" position and the release button 40 in a raised position which fixes the rotatable front handle 32 in position.

The housing 12 has a flange 52 and the rotatable front handle 32 is rotatably mounted thereon. The housing 12 has a neck portion 51 narrower and rearwards of the flange 52 and a cuff portion 54 of the rotatable front handle 32 co-operates with the neck portion 51. The rotatable front handle 32 has a front trigger 36 which is mechanically coupled to a switching unit 44 via a mechanical linkage. The switching unit 44 has a microswitch 45. The mechanical linkage comprises a first rod 42 which is connected at one end to the front trigger 36. In other embodiments the front trigger 36 can be integral with the first rod 42. The other end of the first rod 42 has a circular plate 46 which abuts against another circular plate 48 of a second rod 50. This means that the rotatable front handle 32 can rotate and the front trigger 36 can still move the second rod 50 via the first rod 42 in any position.

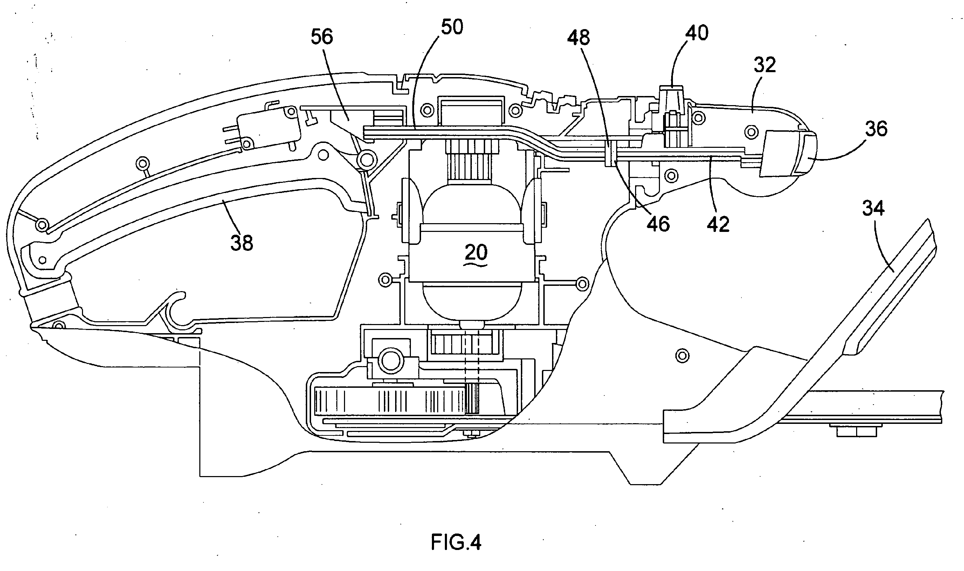

Figure 4 is the same as Figure 3 except that the front trigger 36 has been depressed. This mechanical action pushes the first rod 42 rearwards and in turn pushes the second rod 50 rearwards. As mentioned previously, the second rod is coupled to a circular plate 48 at its forwards end and at the rearwards end of the second rod 50, the second rod 50 is coupled to a chamfered element 56. Depressing the front trigger 36 causes the chamfered element 56 to also move rearwards.

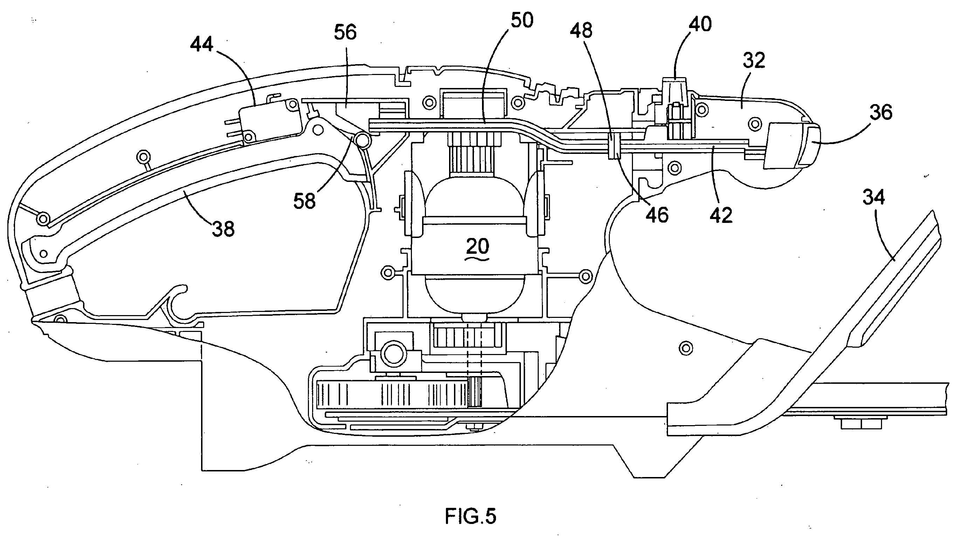

Figure 5 is the same as Figure 4 except that the rear trigger 38 has been depressed and the rear trigger 38 abuts the switching unit 44. As the rear trigger 38 is depressed, a rocker element 58 abuts a chamfered surface of the chamfered element 56. The movement of the rocker element 58 will now be discussed in more detail with reference to Figures 6a and 6b. In Figure 6a the rear trigger (partial view) 38 is depressed. The rocker element 58 is pivotally mounted on the rear trigger 38 at pivot point 60. When the front trigger 36 is not actuated, the rocker element 58 is not in contact with the microswitch 45. When the front trigger 36 is actuated, the second rod 50 moves rearwards as depicted by the arrow and the chamfered element 56 abuts the rocker element 58. The portion of the rocker element 58 which is abutting the chamfered element 56 slides along the chamfered surface and is pushed downwards. As a result the rocker element 58 pivots and rotates in a clockwise direction as shown in Figure 6b. The rocker element 58 then abuts the microswitch 45 and this activates the hedge trimmer 10. In this way the mechanical linkage between the front and rear triggers 36, 38 provides a mechanical "AND" logic gate. The dual switching mechanism can be any suitable means for activating the hedge trimmer on actuation of both the front and rear triggers 36, 38. For example, the switching unit 44 can comprise an electronic AND logic gate or alternatively different mechanical linkages can be provided to achieve a similar effect.

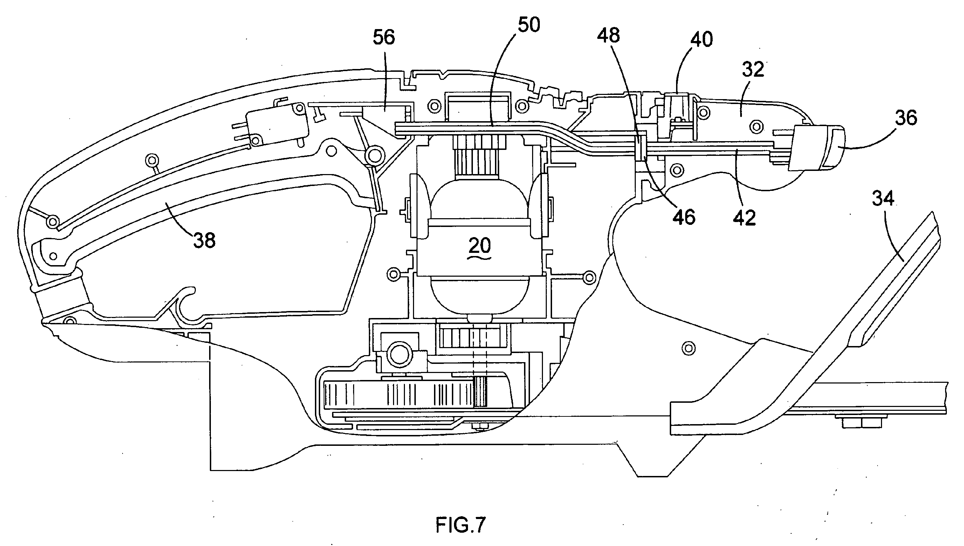

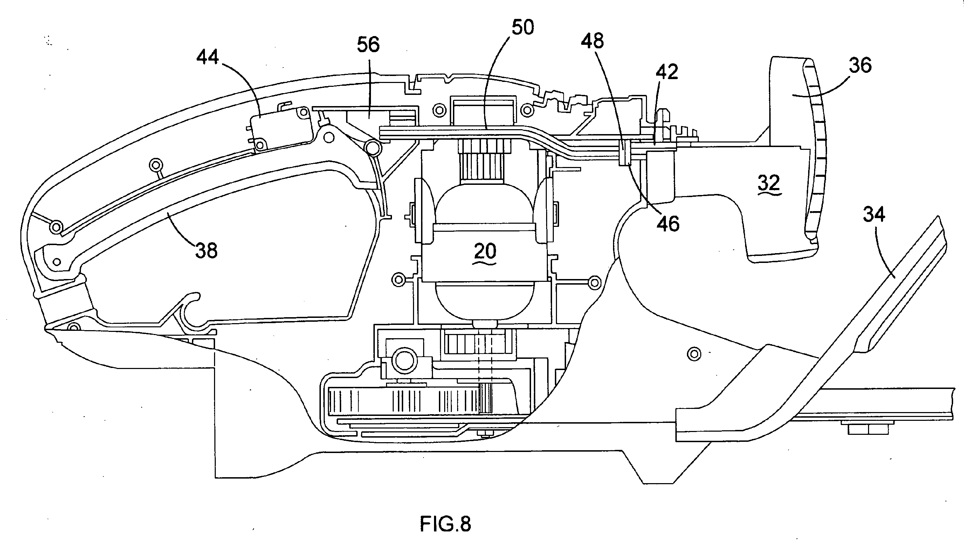

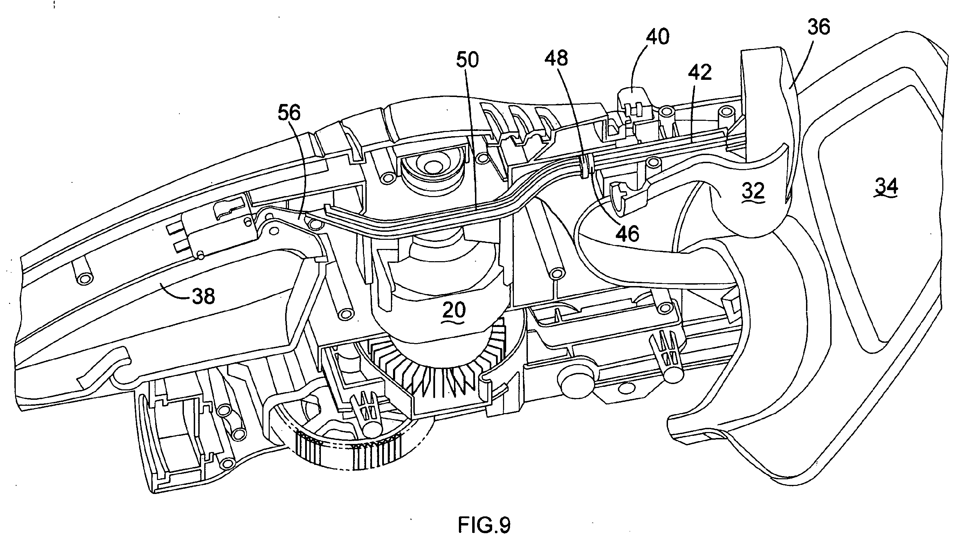

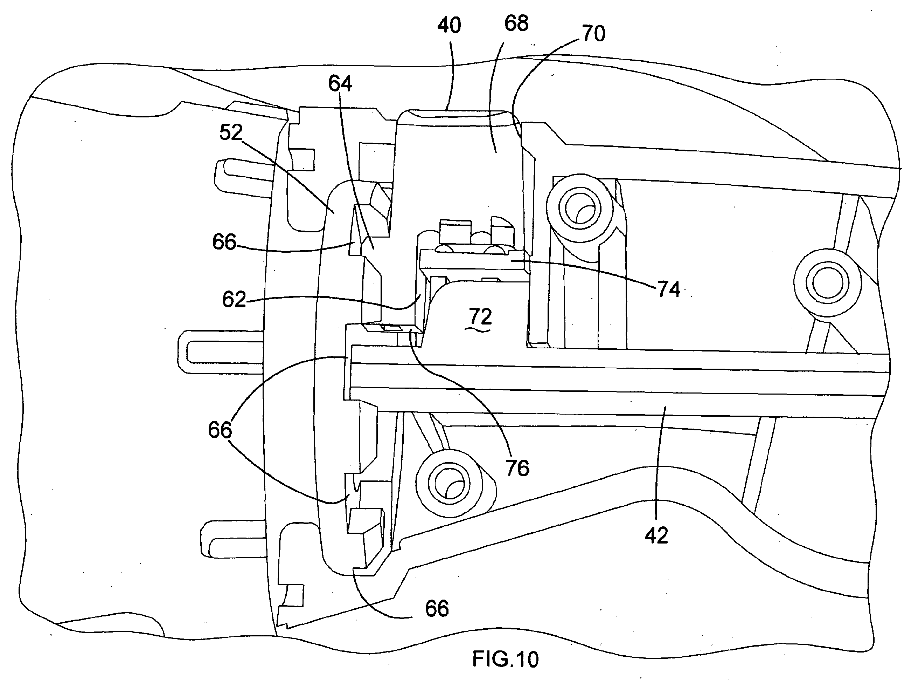

The movement of the rotatable front handle 32 will now be discussed in further detail with reference to Figures 7 to 10. Figures 7 and 8 show a cut away side view of the hedge trimmer with the release button 40 in different states. Figure 9 shows a perspective cut away view of the hedge trimmer with the rotatable front handle 32 having been rotated through 90 degrees. Figure 10 shows a close up cut away plan view of the interlock mechanism in the rotatable front handle 32.

Figure 7 is the same as Figure 3 except the release button 40 has been depressed. Once the release button has been depressed, the rotatable front handle 32 is free to rotate about an axis of rotation. The axis of rotation of the rotatable front handle 32 is substantially in line with a longitudinal axis of the reciprocating blades. This means that the user will grip the vegetation cutting device in a line which is substantially parallel to the axis of the reciprocating blades. In this way the user grips the handles such that the gripping position on the front handle is offset from the axis of the reciprocating blades in substantially one direction, which reduces the turning moment the user experiences when holding the rotatable front handle 32.

The release button 40 is shown in greater detail in Figure 10. The release button 40 is moveable between a first position in which the rotatable front handle 32 is fixed and a second position in which the rotatable front handle 32 is free to rotate. The release button 40 comprises a body portion 68 which slides though an aperture 70 of the rotatable front handle 32. The release button 40 also comprises a finger portion 64. In the first position the finger portion 64 slots into one of a plurality of notches 66 provided by a castellation arrangement on the flange 52. As mentioned previously, the release button 40 is biased towards the first position. When the finger portion 64 is located in a notch 66, the walls of the notch prevent rotation of the finger portion 64 with respect to the flange 52. In this way rotation of the rotatable front handle 32 is prevented when the release button is in the first position.

When the release button 40 is in the second position, as shown in Figure 10, the finger portion 64 is clear of the walls of the notch 66 and the finger portion 64 is free to rotate with respect to the flange 52. This means that the rotatable front handle 32 is free to rotate. The user can then rotate the rotatable front handle 32 to another position. Since the release button 40 is biased to the first position, the release button 40 will snap back towards the first position when the release button 40 moves past a notch 66. If the user wishes to continue to rotate the rotatable front handle 32 the user will keep the release button depressed and rotate the rotatable front handle 32 until the desired gripping position is achieved. In some embodiments the release button 40 can be mechanically coupled to the finger portion 64.

In some embodiments the front rotatable handle can be rotated to a plurality of positions. Indeed there can be five positions including one central position, as shown in figure 3, two 90 degree positions, one of which is shown in Figure 8, and two 45 degree positions. The 90 degree positions or vertical positions provide a gripping position which is best suited to cut vertical hedge faces. The 45 degree positions provide gripping positions best suited for cutting slanting hedge faces. In other embodiments there may be fewer or greater number of possible positions for the rotatable front handle 32.

Figures 8 and 9 show the rotatable front handle 32 in the vertical position. Furthermore these figures show the front trigger 36 and the rear trigger 38 in the actuated position.

The interlock mechanism will now be described in further detail with reference to Figure 10. The interlock mechanism comprises a first interlock element and a second interlock element which mechanically couple with each other in different positions. In some embodiments the first interlock element is a rib 72 mounted on the first rod 42 and the second interlock element is a shoulder portion 62 of the release button 40.

The shoulder portion 62 of the release button 40 is moveable along a path which intersects a path of the rib 72 of the first rod 42. Figure 10 shows the release button 40 in the second position which allows rotation of the rotatable front handle 32. When the release button 40 is in the second position, the shoulder portion 62 is in a blocking position. In this way, the rib 72 cannot move past the shoulder portion and the front trigger 36 is rendered inoperable., Figure 10 also shows the front trigger 36 in an unactuated state. This means that the rib 72 is forwards of the shoulder portion 62.

When the release button 40 is in the first position which prevents rotation of the rotatable front handle 32, the shoulder portion 62 is retracted so that the end 76 of the shoulder portion 62 is in line with wall 74. This means that the shoulder portion 62 is in an unblocking position and the shoulder portion 62 does not impede the movement of the rib 72. When the front trigger 36 is actuated, the first rod 42 moves rearwards and the rib 72 moves to a blocking position. Indeed, the rib 72 moves to a position whereby the rib 72 is adjacent to the end 76 of the shoulder portion 62. When the rib 72 is adjacent to the end 76 of the shoulder portion 62, the shoulder portion 62 cannot move past the rib 72. This means that the release button 40 is inoperable when the front trigger is actuated 36.

In this way the interlock mechanism provides a mechanical "OR" gate whereby only the front trigger or the release button can be operated. In some embodiments the interlock mechanism can be any means suitable for ensuring the only the front trigger or the release button can be operated. This means that the hedge trimmer 10 has to be stopped before a user moves the position of the front rotatable handle 32. This makes modifying the gripping positions of the vegetation cutting device safer for the user.

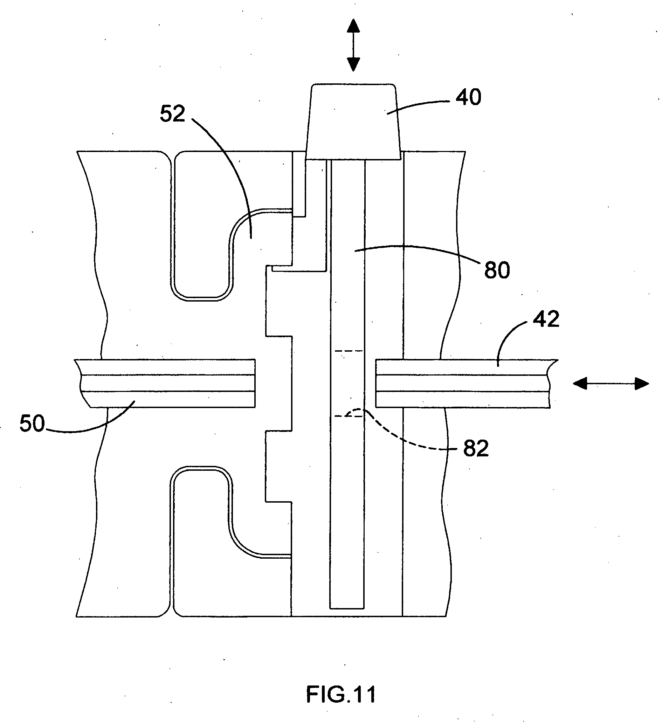

Indeed, other mechanical arrangements can be provided other than the shoulder and rib arrangement. For example Figure 11 shows an alternative arrangement whereby the release button 40 comprises a strut 80 which has a centrally located hole 82. When the release button 40 is in the first position which prevents rotation of the front handle 32, the hole 82 is aligned with the longitudinal axis of the first rod 42. The hole 82 is adapted to receive the first rod 42, and the first rod 42 can move through the hole 82 which couples with the second rod 50 as described in previous embodiments. When the front trigger 36 is actuated, the first rod 42 is in the hole 82 and the release button 40 is prevented from being moved because the sides of the hole 82 abut the first rod 42. Conversely when the release button 40 is depressed, the hole 82 moves and is no longer in line with the axis of the first rod 42. Therefore the front trigger 36 cannot be actuated because the first rod 42 cannot pass through the hole 82.

Embodiments of the present invention have been discussed with particular reference to the examples illustrated. However it will be appreciated that variations and modifications may be made to the examples described within the scope of the invention.

## Claims

1. A vegetation cutting device (10) comprising:
a housing (12);
a motor (20) located within the housing, the motor comprising a rotating output shaft (22) for driving one or more blades (26, 28); and
a rotatable front handle being rotatably mounted on the housing and being adapted to rotate with respect to the housing, the rotatable front handle comprising a first trigger (36), wherein the motor is operable on actuation of the first trigger;
**characterized by**:
a release button (40) in mechanical cooperation with the rotatable front handle for actuating rotation of the front handle; and
an interlock mechanism (62, 72) mechanically coupling the release button and the first trigger wherein actuation of the release button prevents actuation of the first trigger and actuation of the first trigger prevents actuation of the release button.

2. A vegetation cutting device according to claim 1 wherein the interlock mechanism comprises a first interlock element (72) mechanically coupled to the first trigger and a second interlock element (62) mechanically coupled to the release button, the first and second interlock elements selectively prevent actuation of the first trigger or the release button.

3. A vegetation cutting device according to claim 2 wherein the first interlock element is moveable between an unblocking position, whereby the second interlock element is moveable and a blocking position whereby the second interlock element is prevented from movement.

4. A vegetation cutting device according to claims 2 or 3 wherein the second interlock element is moveable between and unblocking position whereby the first interlock element is moveable and a blocking position whereby the first interlock element is prevented from movement.

5. A vegetation cutting device according to claims 2 to 4 wherein the first interlock element comprises a moveable rib and the second interlock element comprises a moveable shoulder portion.

6. A vegetation cutting device according to claim 5 wherein the moveable rib is mounted on an actuation rod mechanically connected to the first trigger and the release button comprises the moveable shoulder portion.

7. A vegetation cutting device according any of the preceding claims wherein a rear handle (30) is mounted on the housing and the rear handle comprises a second trigger (38) wherein the motor is operable on actuation of the first and the second triggers.

8. A vegetation cutting device according to claims 3 to 7 wherein the first and second interlock elements are biased towards the unblocking positions.

9. A vegetation cutting device according to any of the preceding claims wherein the first trigger and the release button are both depressible and depressing the first trigger prevents depressing the release button and depressing the release button prevents depressing the first trigger.

10. A vegetation cutting device according to any of the preceding claims wherein the axis of rotation of the rotatable front handle is substantially in line with a longitudinal axis of the reciprocating blades.

11. A vegetation cutting device according to any of the preceding claims wherein the rotatable front handle is moveable between a plurality of positions.

12. A vegetation cutting device according to claim 11 wherein the rotatable front handle is rotatably mounted on a flange (52) of the housing and the flange comprises a plurality of notches (66) defining the plurality of positions and the release button comprises a finger portion (64) for locating in any one of the notches.

13. A vegetation cutting device according to claim 12 wherein the finger portion of the release button is moveable between a first position in which the rotatable front handle is moveable and a second position in which the finger portion is located in one of the notches thereby preventing rotation of the front rotatable handle.

14. A vegetation cutting device according to any of the preceding claims wherein the vegetation cutting device is a hedge trimmer.

15. A vegetation cutting device according to any of claims 1 to 13 wherein the vegetation cutting device is a chainsaw.

## Patentansprüche

1. Vegetationsschnittvorrichtung (10), umfassend:
ein Gehäuse (12),
einen Motor (20), der sich in dem Gehäuse befindet, wobei der Motor eine sich drehende Abtriebswelle (22) zum Antreiben einer oder mehrerer Schneiden (26, 28) umfasst, und
einen drehbaren vorderen Griff, der drehbar am Gehäuse montiert und dafür eingerichtet ist, sich in Bezug auf das Gehäuse zu drehen, wobei der drehbare vordere Griff einen ersten Auslöser (36) umfasst, wobei der Motor auf Betätigung des ersten Auslösers betreibbar ist,
**gekennzeichnet durch**:
einen Freigabeknopf (40) in mechanischem Zusammenwirken mit dem drehbaren vorderen Griff zum Betätigen der Drehung des vorderen Griffs und
einen Verriegelungsmechanismus (62, 72), der den Freigabeknopf und den ersten Auslöser mechanisch koppelt, wobei die Betätigung des Freigabeknopfs die Betätigung des ersten Auslösers verhindert und die Betätigung des ersten Auslösers die Betätigung des Freigabeknopfs verhindert.

2. Vegetationsschnittvorrichtung nach Anspruch 1, wobei der Verriegelungsmechanismus ein erstes Verriegelungselement (72), das mechanisch mit dem ersten Auslöser gekoppelt ist, und ein zweites Verriegelungselement (62), das mechanisch mit dem Freigabeknopf gekoppelt ist, umfasst, wobei das erste und das zweite Verriegelungselement selektiv die Betätigung des ersten Auslösers oder des Freigabeknopfs verhindern.

3. Vegetationsschnittvorrichtung nach Anspruch 2, wobei das erste Verriegelungselement zwischen einer nicht blockierenden Position, wodurch das zweite Verriegelungselement beweglich ist, und einer blockierenden Position, wodurch die Bewegung des zweiten Verriegelungselements verhindert wird, beweglich ist.

4. Vegetationsschnittvorrichtung nach Anspruch 2 oder 3, wobei das zweite Verriegelungselement zwischen einer nicht blockierenden Position, wodurch das erste Verriegelungselement beweglich ist, und einer blockierenden Position, wodurch die Bewegung des ersten Verriegelungselements verhindert wird, beweglich ist.

5. Vegetationsschnittvorrichtung nach Anspruch 2 bis 4, wobei das erste Verriegelungselement eine bewegliche Rippe umfasst und das zweite Verriegelungselement einen beweglichen Ansatzabschnitt umfasst.

6. Vegetationsschnittvorrichtung nach Anspruch 5, wobei die bewegliche Rippe an einer Betätigungsstange montiert ist, die mechanisch mit dem ersten Auslöser verbunden ist, und der Freigabeknopf den beweglichen Ansatzabschnitt umfasst.

7. Vegetationsschnittvorrichtung nach einem der vorhergehenden Ansprüche, wobei an dem Gehäuse ein hinterer Griff (30) montiert ist und der hintere Griff einen zweiten Auslöser (38) umfasst, wobei der Motor auf Betätigung des ersten und des zweiten Auslösers betreibbar ist.

8. Vegetationsschnittvorrichtung nach Anspruch 3 bis 7, wobei das erste und das zweite Verriegelungselement zur nicht blockierenden Position hin vorgespannt sind.

9. Vegetationsschnittvorrichtung nach einem der vorhergehenden Ansprüche, wobei der erste Auslöser und der Freigabeknopf beide gedrückt werden können und das Drücken des ersten Auslösers das Drücken des Freigabeknopfs verhindert und das Drücken des Freigabeknopfs das Drücken des ersten Auslösers verhindert.

10. Vegetationsschnittvorrichtung nach einem der vorhergehenden Ansprüche, wobei die Drehachse des drehbaren vorderen Griffs im Wesentlichen einer Längsachse der sich hin und her bewegenden Schneiden entspricht.

11. Vegetationsschnittvorrichtung nach einem der vorhergehenden Ansprüche, wobei der drehbare vordere Griff zwischen mehreren Positionen beweglich ist.

12. Vegetationsschnittvorrichtung nach Anspruch 11, wobei der drehbare vordere Griff drehbar an einem Flansch (52) des Gehäuses montiert ist und der Flansch mehrere Kerben (66) umfasst, die die mehreren Positionen definieren, und der Freigabeknopf einen Fingerabschnitt (64) zum Anordnen in einer beliebigen der Kerben umfasst.

13. Vegetationsschnittvorrichtung nach Anspruch 12, wobei der Fingerabschnitt des Freigabeknopfs beweglich ist zwischen einer ersten Position, in der der drehbare vordere Griff beweglich ist, und einer zweiten Position, in der der Fingerabschnitt in einer der Kerben angeordnet ist, wodurch die Drehung des drehbaren vorderen Griffs verhindert wird.

14. Vegetationsschnittvorrichtung nach einem der vorhergehenden Ansprüche, wobei die Vegetationsschnittvorrichtung eine Heckenschere ist.

15. Vegetationsschnittvorrichtung nach einem der Ansprüche 1 bis 13, wobei die Vegetationsschnittvorrichtung eine Kettensäge ist.

## Revendications

1. Dispositif de coupe de végétation (10) comprenant :
un logement (12),
un moteur (20) situé à l'intérieur du logement, le moteur comprenant un arbre de sortie rotatif (22) pour entraîner une ou plusieurs lames (26, 28), et
une poignée avant rotative montée en rotation sur le logement et conçue pour tourner par rapport au logement, la poignée avant rotative comprenant une première gâchette (36), dans lequel le moteur peut être mis en oeuvre en actionnant la première gâchette ;
**caractérisé par**
un bouton de libération (40) en coopération mécanique avec la poignée avant rotative pour actionner la rotation de la poignée avant ; et
un mécanisme de verrouillage (62, 72) accouplant mécaniquement le bouton de libération et la première gâchette dans lequel l'actionnement du bouton de libération empêche l'actionnement de la première gâchette et l'actionnement de la première gâchette empêche l'actionnement du bouton de libération.

2. Dispositif de coupe de végétation selon la revendication 1, dans lequel le mécanisme de verrouillage comprend un premier élément de verrouillage (72) accouplé mécaniquement à la première gâchette et un second élément de verrouillage (62) accouplé mécaniquement au bouton de libération, les premier et second éléments de verrouillage empêchent de manière sélective l'actionnement de la première gâchette ou du bouton de libération.

3. Dispositif de coupe de végétation selon la revendication 2, dans lequel le premier élément de verrouillage est mobile entre une position de déblocage, de sorte que le second élément de verrouillage est mobile et une position de blocage de sorte que le second élément de verrouillage est empêché de se déplacer.

4. Dispositif de coupe de végétation selon les revendications 2 ou 3, dans lequel le second élément de verrouillage est mobile entre une position de déblocage de sorte que le premier élément de verrouillage est mobile et une position de blocage de sorte que le premier élément de verrouillage est empêché de se déplacer.

5. Dispositif de coupe de végétation selon les revendications 2 à 4, dans lequel le premier élément de verrouillage comprend une nervure mobile et le second élément de verrouillage comprend une partie formant épaulement mobile.

6. Dispositif de coupe de végétation selon la revendication 5, dans lequel la nervure mobile est montée sur une tige d'actionnement mécaniquement reliée à la première gâchette et le bouton de libération comprend la partie formant épaulement mobile.

7. Dispositif de coupe de végétation selon n'importe laquelle des revendications précédentes, dans lequel une poignée arrière (30) est montée sur le logement et la poignée arrière comprend une seconde gâchette (38) dans lequel le moteur peut être mis en oeuvre lors de l'actionnement de la première et de la seconde gâchette.

8. Dispositif de coupe de végétation selon les revendications 3 à 7, dans lequel les premier et second éléments de verrouillage sont sollicités vers les positions de déblocage.

9. Dispositif de coupe de végétation selon n'importe laquelle des revendications précédentes, dans lequel la première gâchette et le bouton de libération peuvent tous les deux être enfoncés et l'enfoncement de la première gâchette empêche l'enfoncement du bouton de libération et l'enfoncement du bouton de libération empêche l'enfoncement de la première gâchette.

10. Dispositif de coupe de végétation selon n'importe laquelle des revendications précédentes, dans lequel l'axe de rotation de la poignée avant rotative est sensiblement aligné avec un axe longitudinal des lames allant et venant.

11. Dispositif de coupe de végétation selon n'importe laquelle des revendications précédentes, dans lequel la poignée avant rotative est mobile entre une pluralité de positions.

12. Dispositif de coupe de végétation selon la revendication 11, dans lequel la poignée avant rotative est montée en rotation sur une bride (52) du logement et la bride comprend une pluralité d'encoches (66) définissant la pluralité de positions et le bouton de libération comprend une partie formant doigt (64) pour se situer dans n'importe laquelle des encoches.

13. Dispositif de coupe de végétation selon la revendication 12, dans lequel la partie formant doigt du bouton de libération est mobile entre une première position dans laquelle la poignée avant rotative est mobile et une seconde position dans laquelle la partie formant doigt est située dans une des encoches empêchant ainsi la rotation de la poignée avant rotative.

14. Dispositif de coupe de végétation selon n'importe laquelle des revendications précédentes, dans lequel le dispositif de coupe de végétation est un taille-haie.

15. Dispositif de coupe de végétation selon n'importe laquelle des revendications 1 à 13, dans lequel le dispositif de coupe de végétation est une tronçonneuse.
